Europäisches Patentamt

European Patent Office

Office européen des brevets

(19)

(11) **EP 1 357 702 A1**

(12) **EUROPÄISCHE PATENTANMELDUNG**

(43) Veröffentlichungstag:
**29.10.2003 Patentblatt 2003/44**

(51) Int Cl.⁷: **H04L 12/26**, H04B 3/46,
G01R 31/00

(21) Anmeldenummer: **02008552.8**

(22) Anmeldetag: **16.04.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **SIEMENS AKTIENGESELLSCHAFT**
**80333 München (DE)**

(72) Erfinder:
• **Ahrndt, Thomas, Dr.**
**85521 Ottobrunn (DE)**

• **Kozek, Werner, Dr.**
**1220 Wien (AT)**
• **Schüszler, Bert**
**1220 Wien (AT)**

(74) Vertreter: **Berg, Peter, Dipl.-Ing.**
**Siemens AG**
**Postfach 22 16 34**
**80506 München (DE)**

(54) **Verfahren zum Testen von Teilnehmeranschlussleitungen für Breitbanddienste**

(57) Die Erfindung betrifft ein Verfahren zur Vorqualifizierung von Teilnehmeranschlussleitungen für Breitbanddienste mittels dem nach Anlegen eines Signals an die zu testende Teilnehmeranschlussleitung durch Beobachtung des Ausgangssignales eine mathematische Charakterisierung des physikalischen Verhaltens der Teilnehmeranschlussleitung erreicht wird.

Ausgehend von dieser mathematischen Charakterisierung wird dann mit Hilfe von klassischen physikalischen Modellen auf relevante Parameter der Teilnehmeranschlussleitung zurückgeschlossen.

Zur statistisch robusten Schätzung der genannten mathematischen Charakterisierung wird eine kombinierte Zeit-Frequenz-Darstellung verwendet, die Weil-Transformation gemäß "A. Weil, Basic Number Theory, Grundlehren der mathematischen Wissenschaften, Bd. 144, Springer 1985".

EP 1 357 702 A1

**Beschreibung**

Die Erfindung betrifft ein Verfahren zur Vorqualifizierung von Teilnehmeranschlussleitungen für Breitbanddienste.

Die breitbandige Datenübertragung über die Kupferdoppelader der Teilnehmeranschlussleitungen des klassischen Telefonnetzes, insbesondere ADSL (asymmetrical digital subscriber line), gewinnt zunehmend an Bedeutung. Gemeinsames Kennzeichen aller standardisierten xDSL-Dienste (ADSL, SDSL, SHDSL, VDSL) ist die Ausdehnung des genutzten Frequenzbereichs weg von der Sprachbandbreite (4Khz) bis hinein in Bereiche von über 1 MHz.

Da das Telefonnetz nicht für diesen Frequenzbereich konzipiert ist, basieren diese Dienste auf Ratenadaptivität der Übertragungsverfahren, d.h. die erzielbare Nutzdatenrate hängt jeweils von den technisch-physikalischen Gegebenheiten des individuellen Teilnehmeranschlusses ab.

Haupteinflussgrössen sind dabei die Leitungslänge, der Leitungstyp und gegebenenfalls elektromagnetisch eingestreute Störungen; aber auch Stückelungen, nicht-fachgerechte Hausverkabelungen, defekte Endgeräte, offene Stichleitungen und Nebensprechen, wenn in einem Kabelbündel zahlreiche xDSL-Dienste aufgeschaltet sind, verringern die möglichen Datenraten.

Die nicht vorhersagbare Leistung (Datenrate) der Breitbanddienste bedeutet für die Anbieter dieser Dienste ein hohes Erstinstallationsrisiko, so z.B. wenn der Anbieter bei der Installation eines derartigen Anschlusses finanzielle Aufwendungen auf sich nimmt, die er über Internetnutzungsgebühren zu erwirtschaften beabsichtigt(Gratis-PC mit ADSL-Modem). Aber auch bei weniger riskanten Geschäftsmodellen kann eine Abschätzung der möglichen Datenrate eines Breitbanddienstes jedenfalls Servicekosten reduzieren bzw. die generelle Kundenakzeptanz der XDSL-Technologie verbessern.

Bekannte Testverfahren für Teilnehmeranschlussleitungen wie die sogenannte Zeit-Bereichsreflektometrie (kurz TDR für time-domain reflectometry) zum einseitigen, messtechnischen Test von Nachrichtenkabeln, wurden für die Sprachbandbreite entwickelt und sind daher nur bedingt zur Vorqualifizierung für xDSL-Dienste geeignet.

Beim TDR-Verfahren wird ein kurzer (und damit relativ breitbandiger) Spannungspuls an das Adernpaar angelegt und die Verzögerung des Echos gemessen. Bei bekannter Ausbreitungsgeschwindigkeit des Signales kann daraus direkt die Kabellänge ermittelt werden. Durch periodische Wiederholung der Messung und Oszilloskopie können von gut ausgebildeten Fachleuten auch Stückelungen, offene Stichleitungen und ähnliche, die Datenrate beeinflussende Störquellen erkannt werden. Diese Methode erfordert den Einsatz von gut geschultem Personal und ist damit aufwendig und kostenintensiv.

Der Erfindung liegt daher die Aufgabe zugrunde, ein Verfahren anzugeben, das mit geringem Aufwand die Vorqualifizierung einer Teilnehmeranschlussleitungen für Breitbanddienste und damit die genaue Vorhersage der erzielbaren Datenrate eines Breitbanddienstes erlaubt. Wesentlich ist es dabei, dass es das Verfahren erlaubt, die Teilnehmeranschlussleitungen einseitig vom Amt aus zu messen.

Gelöst wird diese Aufgabe mit dem erfindungsgemäßen Verfahren nach Anspruch 1.

Die Erfindung wird anhand eines Beispieles näher erläutert:

Kern des erfindungsgemäßen Verfahrens ist ein Systemidentifikationsalgorithmus mittels dem nach Anlegen eines Signals an die zu testende Teilnehmeranschlussleitung durch Beobachtung des Ausgangssignales eine mathematische Charakterisierung des physikalischen Verhaltens der Teilnehmeranschlussleitung erreicht wird.

Ausgehend von dieser mathematischen Charakterisierung wird dann mit Hilfe von klassischen physikalischen Modellen auf relevante Parameter der Teilnehmeranschlussleitung zurückgeschlossen.

Zur statistisch robusten Schätzung der genannten mathematischen Charakterisierung wird eine kombinierte Zeit-Frequenz-Darstellung verwendet, die Weil-Transformation gemäß "A. Weil, Basic Number Theory, Grundlehren der mathematischen Wissenschaften, Bd. 144, Springer 1985".

Im folgenden wird das erfindungsgemäße Verfahren im Detail beschrieben:

Es wird ein zeitdiskretes Multiträger-Zufallssignal als Testsignal ausgesendet. Dieses ist wie folgt aufgebaut:

$$s(n) = \sum_{k=0}^{M} \sum_{l=0}^{N} c_{k,l} g(n - lN_T) \exp\left( j2\pi \frac{nk}{M_F} \right)$$

mit folgenden Variablen:

$n$    der Zeitindex (korrespondiert zum Sendetakt)

$s(n)$     die Abtastwerte des Testsignals (im Sendetakt)

$k$      der Symbolindex (korrespondiert zum Symboltakt)

$l$      der Trägerindex (korrespondiert zum Trägerfrequenzabstand)

$c_{k,l}$     komplexwertige Zufallskoeffizienten

$N_T$     die Symboldauer (gemessen im Sendesignaltakt)

$M_F$     die Länge der der Modulation zugrundeliegenden diskreten Fouriertransformation = (#Modulationsträger+1)*2 -1

$g(n)$      die (reellwertigen) Abtastwerte des Sendepuls (im Sendetakt)

Die stochastische Innovation des Sendesignals rührt ausschliesslich von den komplexwertigen Zufallskoeffizienten $C_{k,l}$ her. Folgende Statistik wird dabei angestrebt :

$$E\{c_{k,l} \bar{c}_{m,n}\} = \sigma^2(k)\delta_{k,m}\,\delta_{l,n}, \qquad (2)$$

d.h. die Koeffizienten sind unkorreliert und ihre Varianz hängt ausschliesslich vom Trägerindex ab ($\delta_{k,m}$ ist hierbei das Kroneckersche Delta-Symbol, und $\bar{C}_{m,n}$ ist die komplex konjugiert Zahl von $C_{m,n}$).
Eine weitere, in Zusammenhang mit Basisband-Multiträgermodulation durchaus übliche Bedingung ist die hermitesche Symmetrie der Koeffizienten:

$$C_{k,l} = \bar{C}_{mF-k,l}, \qquad (3)$$

Dadurch ist sichergestellt dass das Sendesignal reellwertig ist. Glg. (2) kann näherungsweise durch einen üblichen Pseudozufallszahlengenerator (wie z.B. in W.H. Press, B.P. Flannery, S.A. Teukolsky, W.T. Vetterling, "Numerical Recipes in C", Cambridge University Press, Cambridge 1993. und entsprechende Gewichtung gewonnen werden.
Sofern die Periode des Pseudozufallsgenerator grösser ist als die Messperiode, kann man das Sendesignal als Realisierung eines zyklostationären Zufallsprozesses betrachten. D.h. im Gegensatz zur klassischen Zeitbereichsreflektometrie ist das Signal nicht strikt periodisch (nur in seinen statistischen Eigenschaften gibt es Periodizität).
Andererseits ist das Testsignal auch kein Spezialfall üblicher Multiträgersignale (wie sie in der Trainigsphase von ADSL-Modems verwendet werden) die entweder einen zyklischen Präfix bzw. orthogonale Pulsformen gemäß S. D. Sandberg and M.A. Tzannes, "Overlapped discrete multitone modulation for high speed copper wire", IEEE Journal Selected Areaes of Communications, Vol.13, No. 9, Dec. 1995. verwenden.
Charakteristischer Bestandteil der Erfindung ist die Verwendung einer relativ langen (3-5 mal die Symbollänge überspannenden) gut frequenzlokalisierten Fensterfunktion, zusammen mit der Bedingung

$$M_F = KN_T, \qquad (5)$$

sodass letztendlich ein nichtorthogonales, übervollständiges Funktionensystem entsteht.
Dies ist unterschiedlich zu dem Ansatz von W. Kozek und A.F. Molisch, "Nonorthogonal pulseshapes for multicarrier communications in doubly dispersive channels", Oct. 1998, IEEE J. Select. Areas Comm., Vol.16, No. 8, pp.1579-1589.
Bei dem ein nichtorthogonales, aber unvollständiges Funktionensystem für die Multiträgerübertragung vorgeschlagen wird.)
Insbesondere bedeutet es, dass die Redundanz des Sendesignals gewissermassen über Zeit- und Frequenzrichtung verschmiert ist. Solche Funktionensysteme sind lediglich bekannt aus der Signalanalyse, die Anwendung zur Synthese eines teilredundanten Pseudozufallssignals allerdings neu und erfinderisch. Dieses erfindungsgemäße Sendesignal bietet folgende Vorteile:
Die Messbandbreite kann flexibel gestaltet werden, d.h. es können zum Beispiel die POTS-Bänder (also der für klassische Telefonie benötigte Frequenzbereich ausgeblendet werden (notwendig für die Integration im Breitbandanschlussmultiplexer bei ADSL). Dies ist ein klarer Vorteil gegenüber W.W. Jones, "Sequence Time Domain Reflectometry (STDR) For Digital Subscriber Line Provisioning and Diagnostics", White Paper, Mindspeed Technologies TM, wo ein sich von der Gleichspannung beginnender Frequenzbereich verwendet wird.

Die verfügbare Messbandbreite kann wesentlich besser ausgenutzt werden. Die Empfindlichkeit gegenüber Pulsstörungen ist geringer. Bei nicht streng synchroner Sende- und Empfangssignalabtastung kann der Frequenzoffset explizit kompensiert werden.

Durch Phasenmittelung kann man den zyklostationären Prozess auf einen stationären Prozess abbilden. Das

Leistungsdichtespektrum $S_s(f)$ des phasengemittelten Testsignals hängt von der Leistungsverteilung auf den Trägern ab (durch $\sigma(k)$ festgelegt) und der Wahl des Pulses $g(n)$:

$$S_s(f) = \sum_{k=0}^{M_F-1} \sigma^2(k) \left| G\left( f - \frac{1}{T}\left( k - \frac{M_F-1}{2} \right) \right) \right|^2$$

（6）

wobei $T$ die Abtastperiode des Sendesignals ist und $G(f)$ das Spektrum des Sendepuls. Durch entsprechende Auswahl von $\sigma(k)$ können die zulässigen Masken für das Sendespektrum zum Beispiel Ausblendung der POTS-Bänder erreicht werden. Die Wahl des Pulses $g(n)$ ist weniger kritisch, im einfachsten Fall wählt man eine klassische, gut frequenzlokalisierte Fensterfunktion wie zum Beispiel Hamming oder Kaiser, siehe W. Kozek und A.F. Molisch, "Nonorthogonal pulseshapes for multicarrier communications in doubly dispersive channels", Oct. 1998, IEEE J. Select. Areas Comm., Vol.16, No. 8, pp.1579-1589.
Seite 126.

Im weiteren werden Auschnitte der Länge $N$ aus dem Sendesignal wie folgt betrachtet:

$$s_m(n) = s(n-mKN_T)\chi_{[0, KN_T]}(n-mKN_T) \tag{7}$$

hierbei steht $\chi_{[0,N]}(n)$ für einen Rechteckpuls mit Amplitude 1 und Länge $N$.

Die Weil-Transformation eines Vektors $x(n)$ der Länge

$N = KN_T$ ist gegeben durch

$$W_x(n,k) = \frac{1}{\sqrt{K}} \sum_{l=0}^{K} x(n+lN_T) \exp\left( j2\pi \frac{lk}{L} \right),$$

（8）

sie steht in umkehrbar eindeutiger Beziehung zum Signal ( A. Weil, Basic Number Theory, Grundlehren der mathematischen Wissenschaften, Bd. 144, Springer 1985). Physikalisch kann hier $m$ als Zeitindex und $k$ als Frequenzindex interpretiert werden. Grundprinzip des Identifikationsverfahrens ist nun über eine Kreuzkorrelationsanalyse im Weil-Bereich zu einer Schätzung der Weil-transformierten Echo-Impulsantwort zu kommen. Die Kreuzkorrelationsfunktion ist hier definiert als:

$$C_{y,s}(m,k) = E\{W_y(n+m,k)\overline{W_S(n,k)}\}. \tag{9}$$

Vorteilhafterweise kann die Weil-Transformierte eines Sendesignalblockes durch zweidimensionale, diskrete Fouriertransformation der Sendekoeffizienten und Multiplikation mit der Weiltransformierten des Sendesignalfensters

gebildet werden

$$W_{x\chi[i,i+KN_T]}(m,n) = W_g(m,n).$$

$$\sum_{m=0}^{N_T} \sum_{l=i}^{i+K-1} c_{k,l} \exp\left(-j2\pi\left(\frac{mk}{N_T}+\frac{nl}{K}\right)\right) \quad (10)$$

Weiters werden Empfangssignalkoeffizienten durch ein Skalarprodukt mit dem modulierten Empfangssignalfenster wie folgt gebildet:

$$d_{k,l} = \sum_{n=lN_T}^{(l+1)N_T} y(n)\bar{\gamma}(n-lN_T)\exp\left(-j2\pi\frac{nk}{M_F}\right)$$

Daraus kann dann analog die Weiltransformierte des Empfangssignals y(n) analog zu (10) gebildet werden:

$$W_{y\chi[i,i+KN_T]}(m'\,n) = W_\gamma(m,n) \cdot$$

$$\sum_{m=0}^{N_T} \sum_{l=i}^{i+K-1} d_{k,l} \exp\left(-j2\pi\left(\frac{mk}{N_T}+\frac{nl}{K}\right)\right)$$

Unter der Annahme der Ergodizität des Eingangssignals (nur gerechtfertigt sofern die Periode der beteiligten Pseudozufallssignale grösser als die Messzeit bleibt), kann man die Erwartungswertbildung durch Zeit/Frequenzmittelwertbildungen ersetzen:

$$\widetilde{C}_{y,s}(m,k) = \frac{1}{N_M K_L}\sum_{n=0}^{N_M} W_y(n,k)\overline{W_{s_m}(n+m,k)},$$

**(11)**

wobei $S_m(n)$ den in Glg. (7) beschrieben Sendesignalblock beschreibt.

Das vorgeschlagene Verfahren zur Systemidentifikation eignet sich natürlich auch zur adaptiven Echounterdrückung (echo cancelling), mit den oben beschriebenen Vorteilen der Möglichkeit von Ausblendung bestimmter Frequenzbänder, wie beispielsweise in einer der folgenden Literaturstellen beschrieben:

K. Townsend et al, "Apparatus and method for echo characterization of a communication channel ", US Patent Nr. 5,577,116, Nov. 1996.

J.P. Agrawal et al, "Adaptive echo cancellation and equalization system signal processor and method therefor", US Patent Nr. 4,760,596, July 1988.

**EP 1 357 702 A1**

S. Wu et al, "Efficient echo cancellation for DMT MDSL", US Patent Nr. 6,072,782, June 2000.

M. Ho et al, "Method and apparatus for echo cancellation with discrete multitone modulation", US Patent Nr. 5,317,596, May 1994.

Die beschriebenen Verfahren zur Systemidentifikation (als Bestandteil eines adaptiven Echo-Cancellers) unterscheiden sich in mehreren Gesichtspunkten vom erfindungsgemäßen Verfahren, zumeist werden Abwandlungen des sogenannten LMS-Algorithmus verwendet oder das klassische Kalmanfilter.

Nach der vorliegenden Anwendung zur Vorqualifizierung von Teilnehmeranschlussleitungen für Breitbanddienste geschieht die Auswertung der Weiltransformierten der interessierenden Impulsantwort wie folgt:

Zwar kann bereits ein geübter Betrachter aus Rohdaten (z.B. der Echoimpulsantwort) einige Rückschlüsse auf die Länge einer Leitung bzw. die Art des Abschlusses ziehen, für den Einsatz der vorliegenden Erfindung ist aber eine automatisierte Auswertung vorgesehen, deren Endergebnis die Vorhersage von xDSL-Performance ist ("reach prediction").

Etwaige additive Störungen die für die Ermittlung der xDSL-Performance unter Umständen relevant sind, können direkt aus den ohnehin schon ermittelten Empfangssignalkoeffizienten durch Erwartungswertbildung über den Zeitindex gebildet werden:

$$S_{noise,k} = E_l\left\{\left|d_{l,k}\right|^2\right\}$$

Die dabei gewählte Vorgangsweise besteht nun darin, ausgehend von gemessenen Rohdaten (komplexe Zahlen) eine multidimensionale Tabelle anzulegen, die durch relevante physikalische Grössen parametrisiert ist (z.B. Leitungslänge und Abschluss).

Im folgenden wird die Vorgangsweise für die Parameter Leitungslänge und Abschluss beschrieben, die Auswertung könnte aber konzeptuell analog auch auf andere Zwischenparameter abzielen.

Die Rohdaten $\tilde{W}_h(p,q)$ werden mit als Tabellenvektoren $T^{(k,m)}(p,q)$ dargestellten Werten von gemessenen Referenzleitungen verglichen und es werden jene Indizes ausgewählt, die die kleinste absolute Abweichung (im Sinne komplexer Zahlen aufweisen):

$$(k_{opt},l_{opt})= \arg\min_{k,l}\sum_q \sum_p \left|T^{(k,l)}(p,q)-\tilde{W}_h(p,q)\right|$$

Aus diesem Vergleich kann damit direkt auf die physikalischen Eigenschaften der zu messenden Teilnehmeranschlußleitung geschlossen werden.

Hierbei entspricht der Index k der beispielhaften Implementation folgend einem Widerstandswert des Abschlusses und der Index 1 einer Leitungslänge. Um die Auflösung des Messverfahrens zu erhöhen, erweist es sich als vorteilhaft nach dieser Optimierung eine komplexe Interpolation anzuschliessen. Diese kann mit den üblichen Verfahren zur multidimensionalen Interpolation durchgeführt werden, wie sie z.B. in W.H. Press, B.P. Flannery, S.A. Teukolsky, W.T. Vetterling, "Numerical Recipes in C", Cambridge University Press, Cambridge 1993 beschrieben sind.

Die letztendlich interessierenden xDSL Parameter (zu erwartende Datenübertragungsrate) können dann durch eine einfache Tabellensuche gewonnen werden.

Eine Kalibrierung des Messsystems ist dann zweckmäßig, wenn z.B. bei langen Leitungslängen das interne Echo der Messanordnung typischerweise wesentlich stärker sein wird als das charakteristische Echo vom Ende das Kabels. Beim Ausführungsbeispiel ist eine automatische Kalibrierung durch Anschaltung digital steuerbarer Leitungssimulatoren bzw. Widerstandsdekaden durchführbar.

**6**

**Patentansprüche**

1. Die Erfindung betrifft ein Verfahren zur Vorqualifizierung von Teilnehmeranschlussleitungen für Breitbanddienste mit folgenden Verfahrensschritten:

   - an einen Testpunkt der Teilnehmeranschlußleitung wird ein gemäß

$$s(n) = \sum_{k=0}^{M} \sum_{l=0}^{N} c_{k,l} g(n - lN_T) \exp\left( j2\pi \frac{nk}{M_F} \right)$$

   gebildetes zeitdiskretes Multiträger- Sendesignal angelegt,
   - die Echoimpulsantwort y(n, der Teilnehmeranschlußleitur wird an dem Testpunkt gemessen,
   - aus der Echoimpulsantwort werden zweite komplexwertige Zufallskoeffizienten $d_{k,l}$ gemäß

$$d_{k,l} = \sum_{n=(l-1)N_T}^{n=(l+1)N_T} y(n)\gamma(n - lN_T) \exp\left( -j2\pi \frac{nk}{M_F} \right)$$

   ermittelt,
   - der empirische Schätzwert der Kreuzkorrelationsfunktion $\tilde{w}_*(p,q)$ der aus den Indizes $C_{k,1}$ und $d_{k,1}$ durch zweidimensionale diskrete Fouriertransformation gebildeten Signale

$$C_{m,n}^{(i)} = \sum_{m=0}^{N_T} \sum_{l=i}^{i+K-1} c_{k,l} \exp\left( -j2\pi\left( \frac{mk}{N_T} + \frac{nl}{K} \right) \right)$$

$$D_{m,n}^{(i)} = \sum_{m=0}^{N_T} \sum_{l=i}^{i+K-1} d_{k,l} \exp\left( -j2\pi\left( \frac{mk}{N_T} + \frac{nl}{K} \right) \right)$$

   gemäß (wobei 0<λ<1 ein Vergessensfaktor ist, der an die gesamte Mittelungslänge der Messung entsprechend der Rechengenauigkeit des verwendeten Prozessors zu wählen ist)

$$K_{m,k}^{(i+1)} = (1-\lambda)K_{m,k}^{(i)} + \lambda C_{m+n,k}^{(i)} W_g(m+n,k) \overline{D_{m,n}^{(i)}} \overline{W_\gamma}(m,k)$$

   wird ermittelt,
   und analog zur Schätzung der Kreuzkorrelationsfunktion eine Schätzung des Leistungsdichtespektrums et-waiger Störsignale entsprechend

$$S_{noise,k}^{(i+1)} = (1-\lambda)S_{noise,k}^{(i)} + \lambda|d_{i,k}|^2 \text{ durchgeführt,}$$

   - der empirische Schätzwert der Kreuzkorrelationsfunktion $\tilde{w}_*(p,q)$ wird mit den gespeicherten Werten von gemessenen Referenzleitungen $T^{(k,m)}(p,q)$ verglichen, und aus dem Vergleich werden die physikalischen Pa-

rameter der Teilnehmeranschlußleitung ermittelt.

**Europäisches Patentamt**

# EUROPÄISCHER RECHERCHENBERICHT

Nummer der Anmeldung

EP 02 00 8552

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,X | JONES, W.W.; JONES, K.R.: "Sequence time domain Reflectomety (STDR) for Digital Subscriber Line provisioning and diagnostics" WHITE PAPER, [Online] 2001, XP002203227 Gefunden im Internet: <URL:http://web2.mindspeed.com/mspd/news_events/pdfs/stdr_tech.pdf> [gefunden am 2002-09-04] * Absatz [III.B] * ----- | 1 | H04L12/26 H04B3/46 G01R31/00 |

**RECHERCHIERTE SACHGEBIETE (Int.Cl.7)**

H04L
H04B
G01R

Der vorliegende Recherchenbericht wurde für alle Patentansprüche erstellt

| Recherchenort | Abschlußdatum der Recherche | Prüfer |
|---|---|---|
| BERLIN | 4. September 2002 | Farese, L |

EPO FORM 1503 03.82 (P04C03)